# DEMANDE DE BREVET EUROPEEN

(11) **EP 1 243 463 A1**
(43) Date de publication de la demande: **25.09.2002**
(21) Numéro de dépôt: 02290647.3
(22) Date de dépôt: 14.03.2002
(51) Int. Cl.: B60P 1/64

(54) **Appareil de manutention d'une charge, véhicule le comportant et procédé pour soulever une charge avec un tel véhicule**

(30) Priorité: 21.03.2001 FR 0103819
(71) Demandeur: Marrel, 42160 Andrézieux-Bouthéon (FR)
(72) Inventeur: Chabanas, Noel, 42500 Le Chambon Feugerolles (FR); Goiran, Thierry, 42160 Bonson (FR)
(74) Mandataire: Lepelletier-Beaufond, François (FR)

(57) **Abrégé**

L'appareil est prévu pour permettre à un véhicule (1) de poser ou de prendre au sol une charge (5) telle qu'une benne ainsi que de vider cette charge, qui est munie, sur une face avant, d'une anse de levage (6), ledit appareil comportant un bras de manutention (11) déformable et basculant admettant, outre une position de transport et une position de pose ou de prise au sol, une position de vidage à laquelle parvient un crochet (20) prévu pour s'engager avec l'anse de levage (6), en pivotant, sous l'effet d'un vérin de basculement (12), autour d'un axe transversal de pivotement (21) situé à l'arrière de l'appareil, les moyens d'articulation autour de cet axe étant libérables et un vérin (15) étant prévu pour relever une biellette (23) appartenant au bras de manutention (11) en la faisant pivoter vers le haut et vers l'avant.

Le procédé vise la mise sur pied d'une charge (5) qui est alors plus haute que lorsqu'elle est positionnée sur l'appareil.

## Description

L'invention a trait aux appareils pour permettre à un véhicule de manipuler une charge telle qu'une benne munie sur sa face avant d'une anse de levage.

On connaît déjà, notamment par la demande de brevet FR 2 109 109 A un tel appareil qui comporte un bras de manutention déformable et basculant muni à une extrémité d'un crochet prévu pour s'engager avec l'anse de levage de la charge. En position de transport, le bras de manutention présente un tronçon frontal disposé à l'avant de l'appareil et orienté verticalement ou à peu près avec le crochet qui se trouve à son sommet et présente un tronçon longitudinal orienté horizontalement ou à peu près dont une première extrémité se raccorde à la base du tronçon frontal et dont la seconde extrémité est prévue pour être articulée à l'arrière du véhicule autour d'un axe transversal de pivotement, le tronçon longitudinal étant formé par une biellette dont une première extrémité est articulée autour de l'axe transversal de pivotement arrière et par une première branche d'une potence dont la seconde branche forme le tronçon frontal, la première branche de la potence ayant son extrémité opposée au tronçon frontal qui est articulée à la seconde extrémité de la biellette autour d'un axe transversal de pivotement intermédiaire, cette première branche de la potence étant télescopique et admettant une position déployée où sa longueur est maximale et une position rétractée où sa longueur est minimale, cette première branche étant déployée dans la position de transport susmentionnée, le bras de manutention admettant, en outre de cette position :
- une position de pose ou de prise au sol où le crochet est derrière le véhicule à une hauteur lui permettant de s'engager avec ou de se libérer de l'anse de levage d'une charge du type susmentionnée posée sur le sol, le passage entre la position de transport et la position de pose ou de prise au sol se faisant d'abord par passage de la première branche de la potence de sa position déployée à sa position rétractée puis, sous l'effet d'un vérin de basculement, par pivotement de la potence autour de son articulation avec la biellette, cette dernière restant fixe ; et
- une position de vidage à laquelle parvient ledit crochet à partir de la position de transport en pivotant vers le haut et vers l'arrière, sous l'effet du vérin de basculement, autour de l'axe transversal de pivotement arrière, le bras gardant au cours de ce pivotement la même configuration qu'en position de transport.

On connaît également diverses variantes dans l'agencement du tronçon longitudinal du bras et dans la façon dont il se déforme entre la position de transport et la position de pose ou de prise au sol, en particulier par la demande de brevet FR 2 185 520 A où la potence pivote par rapport à la biellette jusqu'à avoir atteint un angle prédéterminé à partir duquel est elle en butée contre la biellette, ces deux organes pivotant alors ensemble autour de l'axe transversal de pivotement arrière ; ou encore par la demande de brevet FR 2 169 810 A où le caractère télescopique de la première branche de la potence est remplacé par le caractère relevable d'un bout avant de cette première branche pour faire reculer le crochet ; certains appareils combinant une potence et une biellette fonctionnant comme dans le document FR 2 185 520 A mais avec une potence dont la première branche est télescopique et/ou à bout avant relevable, respectivement comme dans le document FR 2 109 109 A et dans le document FR 2 169 810 A.

L'invention vise à accroître les possibilités d'utilisation d'un tel appareil tout en conservant son caractère simple et économique.

Elle propose à cet effet un appareil pour permettre à un véhicule de poser ou de prendre au sol une charge telle qu'une benne ainsi que de vider cette charge, ladite charge étant munie, sur une face avant, d'une anse de levage, ledit appareil comportant un bras de manutention déformable et basculant muni à une extrémité d'un crochet prévu pour s'engager avec l'anse de levage de ladite charge, ledit bras de manutention admettant :
- une position de transport où un tronçon frontal est disposé à l'avant dudit appareil et orienté verticalement ou à peu près avec ledit crochet qui se trouve à son sommet et où un tronçon longitudinal est disposé derrière le tronçon frontal et orienté horizontalement ou à peu près avec l'extrémité avant du tronçon longitudinal qui est raccordée à la base du tronçon frontal ;
- une position de pose ou de prise au sol où ledit crochet est derrière le véhicule à une hauteur lui permettant de s'engager avec ou de se libérer de ladite anse de levage d'une dite charge posée sur le sol ; et
- une position de vidage à laquelle parvient ledit crochet à partir de ladite position de transport en pivotant, sous l'effet d'un vérin de basculement, vers le haut et vers l'arrière autour d'un axe transversal de pivotement situé à l'arrière dudit appareil ;
ledit bras de manutention comportant une potence dont une première branche forme ledit tronçon frontal et dont la seconde branche appartient audit tronçon longitudinal, et comportant une biellette fournissant le reste dudit tronçon longitudinal, ladite biellette étant articulée à l'avant avec la seconde branche de ladite potence autour d'un axe transversal de pivotement intermédiaire et articulée à l'arrière autour dudit axe transversal de pivotement arrière ;
caractérisé en ce que :
- les moyens d'articulation de ladite biellette autour dudit axe transversal de pivotement arrière sont adaptés à être libérés tandis que les moyens d'articulation autour dudit axe transversal de pivotement intermédiaire sont adaptés à être verrouillés par rapport audit véhicule à l'emplacement qu'ils occupent en position de transport ; et
- ledit appareil comporte des moyens pour faire pivoter ladite biellette vers le haut et vers l'avant autour dudit axe transversal de pivotement intermédiaire, après libération desdits moyens d'articulation de la biellette autour de l'axe transversal de pivotement arrière et verrouillage par rapport audit véhicule desdits moyens d'articulation autour dudit axe transversal de pivotement intermédiaire.

En faisant ainsi pivoter la biellette, l'on peut relever l'arrière d'une charge en place sur l'appareil puis, en faisant pivoter la potence autour de ce même axe grâce au vérin de basculement, relever à son tour l'avant de cette charge, de sorte que cette dernière peut être toute entière amenée, grâce à l'appareil selon l'invention, dans une position où elle se trouve à une hauteur supérieure à celle qu'elle a en position de transport, en particulier dans le cas où cette charge est munie de pieds repliables servant à la maintenir à une telle hauteur, comme c'est par exemple le cas de certaines bennes à usage agricole dont le fond comporte des moyens de distribution de la matière contenue dans cette benne afin de remplir la remorque d'un tracteur mis en place sous la benne.

On observera que, grâce à l'invention, aucune biellette ou levier supplémentaire n'est nécessaire pour relever l'arrière de la charge, la biellette du bras de manutention étant utilisée à cet effet.

Selon des caractéristiques préférées, ledit appareil comporte un bâti prévu pour être fixé sur le châssis dudit véhicule, ladite biellette étant articulée avec ledit bâti autour dudit axe transversal de pivotement arrière.

Les moyens d'articulation autour de cet axe, qui sont adaptés à être libérés, interviennent donc entre le bras de manutention et le bâti et peuvent donc être tout entier mis en oeuvre en usine, ce qui offre l'avantage que l'assujettissement de l'appareil sur un véhicule ne requiert alors que la fixation du bâti sur ce châssis.

De préférence, pour des raisons de simplicité et de commodité de mise en oeuvre :
- lesdits moyens pour faire pivoter ladite biellette comportent un vérin de relevage articulé à une extrémité à ladite biellette et articulé à l'autre extrémité audit bâti ; et éventuellement
- ledit vérin de relevage est articulé audit bâti à l'avant et à ladite biellette à l'arrière.

Selon d'autres caractéristiques préférées, ladite biellette comporte deux galets prévus pour soutenir respectivement un rail longitudinal situé à droite et un rail longitudinal situé à gauche sur une face inférieure de ladite charge.

Etant donné que ces galets font partie de la biellette, ils pivotent également autour de l'axe transversal de pivotement intermédiaire lors du relèvement de l'arrière d'une charge.

Cela offre l'avantage, par rapport à la solution où les galets feraient partie du bâti ou seraient plus généralement fixes, qu'il n'est pas besoin d'un organe de support de l'arrière de la charge pour prendre le relais lors du pivotement de la biellette autour de l'axe transversal de pivotement intermédiaire.

De préférence, l'axe transversal de pivotement arrière et l'axe transversal autour duquel sont articulés lesdits galets, sont situés à l'écart l'un de l'autre.

Le voisinage de l'axe transversal de pivotement arrière peut ainsi rester relativement dégagé, ce qui facilite la mise en oeuvre des moyens d'articulation adaptés à être libérés.

Dans un premier mode de réalisation préféré, ladite biellette appartient en entier audit tronçon longitudinal avec l'axe transversal d'articulation des galets qui, en position de transport, est situé juste en avant de l'axe transversal de pivotement arrière.

Dans un deuxième mode de réalisation préféré, ladite biellette est à profil en cornière dont une première branche appartient audit tronçon longitudinal et dont la seconde branche est articulée à sa base autour dudit axe transversal de pivotement arrière, ledit axe d'articulation des galets étant situé à la jonction entre la première et la seconde branche de ladite biellette.

L'invention vise également, sous un deuxième aspect, un véhicule comportant un appareil tel qu'exposé ci-dessus.

L'invention vise encore, sous un troisième aspect, un procédé pour soulever avec un tel véhicule une charge munie sur une face avant d'une anse de levage et munie de quatre pieds repliables afin de disposer ladite charge sur lesdits pieds à l'état déployé, la face inférieure de ladite charge étant alors plus haute que dans ladite position de transport, comportant :
a) l'opération de passer de ladite position de transport à une position de début ou de fin de basculement ;
b) l'opération de faire pivoter ladite biellette vers le haut et vers l'arrière autour dudit axe transversal de pivotement intermédiaire;
c) l'opération de déployer les pieds arrière de ladite charge ;
d) l'opération de faire pivoter ladite potence vers le haut et vers l'arrière autour dudit axe transversal de pivotement intermédiaire; et
e) l'opération de déployer les pieds avant de ladite charge.

L'exposé de l'invention sera maintenant poursuivi par la description d'un exemple de réalisation, donnée ci-après à titre illustratif et non limitatif, en référence aux dessins annexés. Sur ceux-ci :
- la figure 1 est une vue en élévation prise depuis le côté gauche d'un véhicule équipé d'un appareil conforme à l'invention, en position de transport d'une benne munie de quatre pieds repliables ;
- les figures 2 à 5 sont des vues similaires, mais montrant l'appareil dans des positions qu'il prend successivement lorsqu'est effectuée la mise en place de la benne sur ses pieds, la longueur de ces derniers étant telle que la benne est alors plus haut qu'en position de transport ;
- la figure 6 est une vue similaire à la figure 1, mais en agrandissement, de la seule portion arrière de l'appareil et des rails prévus sur la face inférieure de la benne ;
- la figure 7 montre cette portion de l'appareil comme sur la figure 6, mais dans une position semblable à celle de la figure 3 ;
- la figure 8 est une vue en élévation-coupe prise transversalement dans l'appareil au niveau de l'axe d'articulation entre la potence et la biellette ;
- la figure 9 est une vue similaire à la figure 8, mais avec les moyens d'articulation entre la potence et la biellette qui sont verrouillés au bâti de l'appareil ;
- la figure 10 montre d'une façon similaire aux figures 6 et 7 une variante de réalisation où la biellette du bras de manutention a un profil en cornière ; et
- les figures 11 et 12 montrent d'une façon similaire aux figures 1 à 5 un véhicule équipé de cette variante de l'appareil, respectivement en position de pose ou de prise au sol de la benne et en position de vidage de cette dernière.

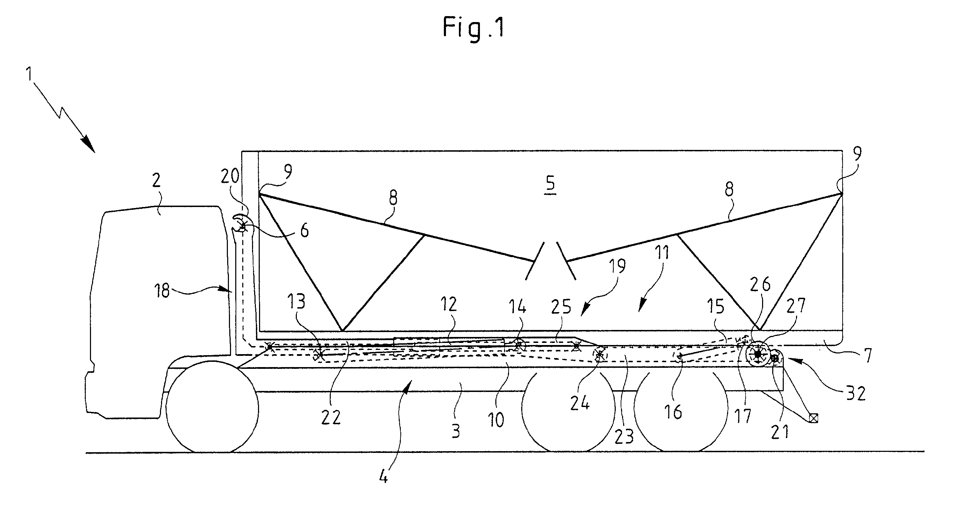

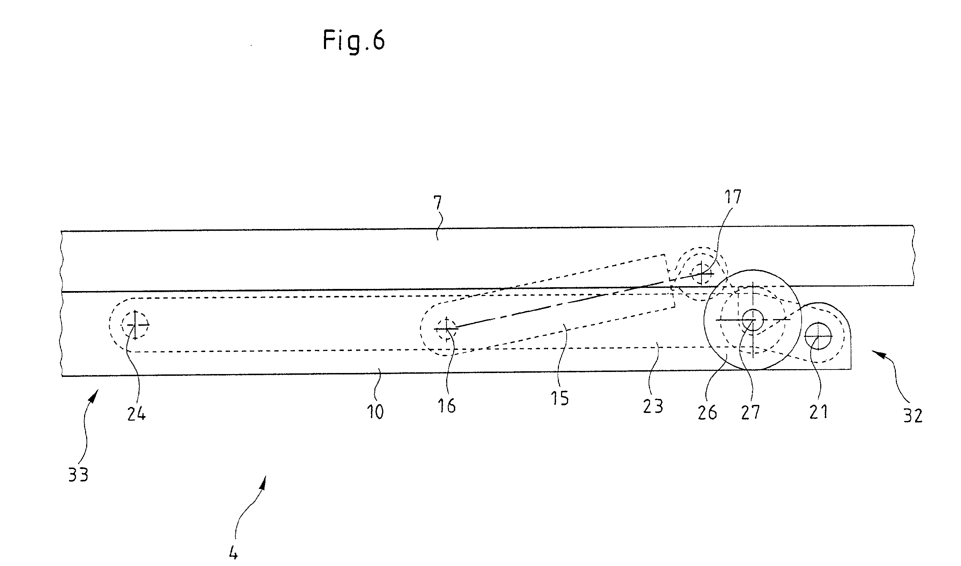

Le véhicule 1 de type poids lourd ou camion montré sur les figures 1 à 7 comporte, derrière une cabine 2, un châssis porteur 3 sur lequel est monté un appareil 4 conforme à l'invention pour manipuler une charge telle que la benne 5, qui est munie de façon bien connue (voir normes AFNOR NF R 17-108 et DIN 30722) d'une anse de levage 6 sur sa face avant et de deux rails longitudinaux 7 situés respectivement à droite et à gauche sur sa face inférieure.

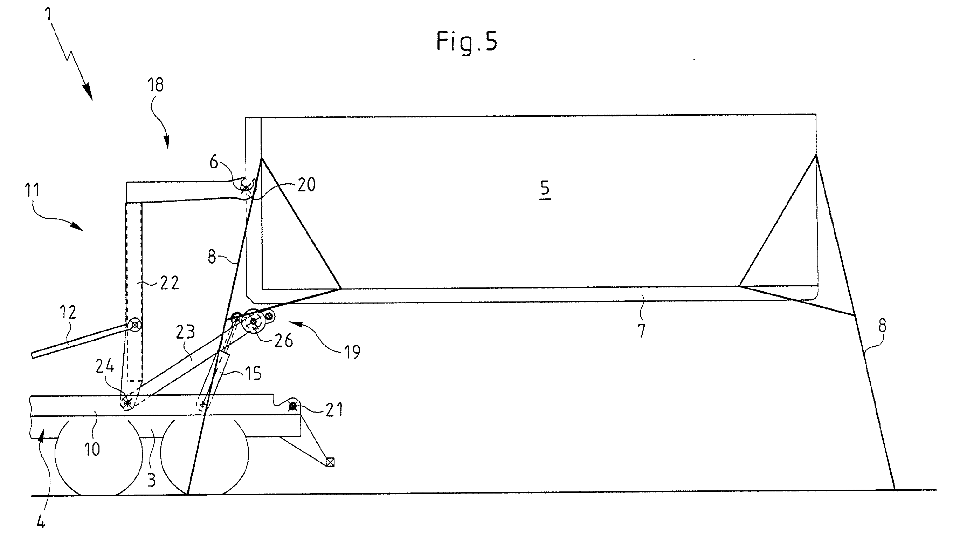

La benne 5 est en outre munie de quatre pieds repliables 8 situés respectivement à l'avant et à gauche, à l'avant et à droite, à l'arrière et à gauche ainsi qu'à l'arrière et à droite, chacun des pieds 8 étant articulé autour d'un axe transversal de pivotement 9 lui permettant de passer de la position repliée montrée sur la figure 1, où il est tout entier disposé contre l'une des faces latérales de la benne 5, à la position déployée montrée sur la figure 5, où il permet à la benne 5 de se trouver avec son fond qui est à une hauteur par rapport au sol relativement importante, qui est ici à peu près deux fois plus élevée que la hauteur du fond de la benne 5 dans la position de transport (figure 1 ).

L'appareil 4 comporte un bâti 10 fixé sur le châssis 3, un bras de manutention 11 monté sur le bâti 10, un vérin de basculement 12 dont l'extrémité avant est articulée sur le bâti 10 autour d'un axe transversal de pivotement 13 et dont l'extrémité arrière est articulée sur le bras 11 autour d'un axe transversal d'articulation 14, ainsi qu'un vérin de relevage 15 ayant lui aussi son extrémité avant qui est articulée sur le bâti 10, autour d'un axe transversal d'articulation 16 et son extrémité arrière qui est articulée sur le bras 11, autour d'un axe transversal d'articulation 17.

Le bras de manutention 11 présente un tronçon frontal 18 et un tronçon longitudinal 19.

En position de transport (figure 1), le tronçon frontal 18 est disposé à l'avant de l'appareil 4 et orienté verticalement ou à peu près avec, à son sommet, un crochet 20 prévu pour s'engager avec l'anse de levage 6 de la benne 5. Dans cette même position, le tronçon longitudinal 19 est disposé derrière le tronçon frontal 18 et orienté horizontalement ou à peu près avec son extrémité avant qui est raccordée à la base du tronçon 18 tandis que son extrémité arrière est articulée autour d'un axe 21 de pivotement arrière vis-à-vis du bâti 10.

Ici, le bras de manutention 11 est formé par une potence 22 et par une biellette 23.

La potence 22 présente deux branches dont l'une forme le tronçon frontal 18 et dont l'autre appartient au tronçon longitudinal 19, cette seconde branche étant, à l'opposé du tronçon frontal 18, articulée à l'extrémité avant de la biellette 23 autour d'un axe transversal de pivotement 24. C'est sur cette seconde branche que l'axe d'articulation 14 entre le vérin 12 et le tronçon longitudinal 19 du bras 11 est prévu, non loin de l'axe 24.

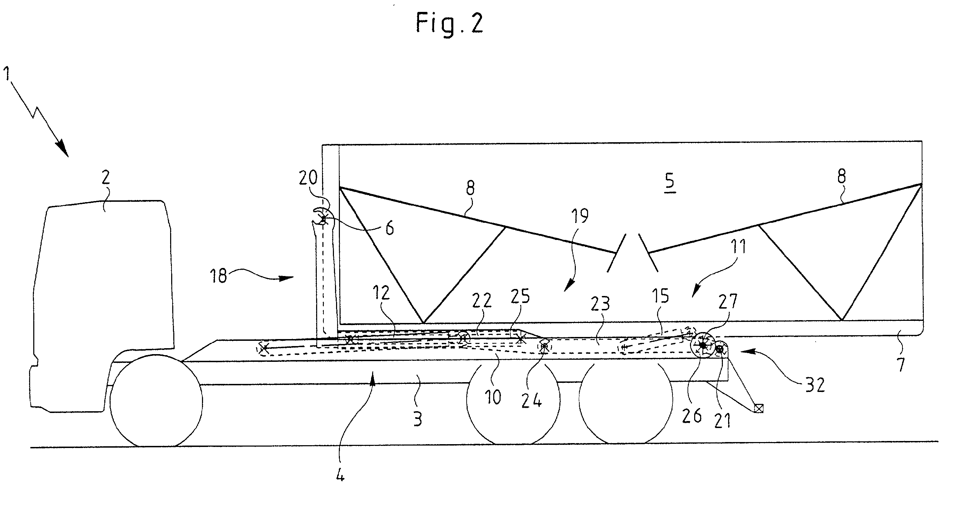

La seconde branche de la potence 22 est télescopique : elle admet une position déployée où sa longueur est maximale (figure 1) et une position rétractée où sa longueur est minimale (figures 2 à 5). Pour permettre à la seconde branche de la potence 22 de passer de la position déployée à la position rétractée et inversement, il est prévu un vérin de bras 25 partiellement illustré sur les figures 1 et 2.

La biellette 23 a un profil rectiligne. Elle est articulée à son extrémité avant à la potence 22 autour de l'axe 24 tandis qu'elle est articulée à son extrémité arrière au bâti 10 autour de l'axe 21. Le tronçon longitudinal 19 du bras 11 est ainsi formé par la biellette 23 et par la seconde branche de la potence 22.

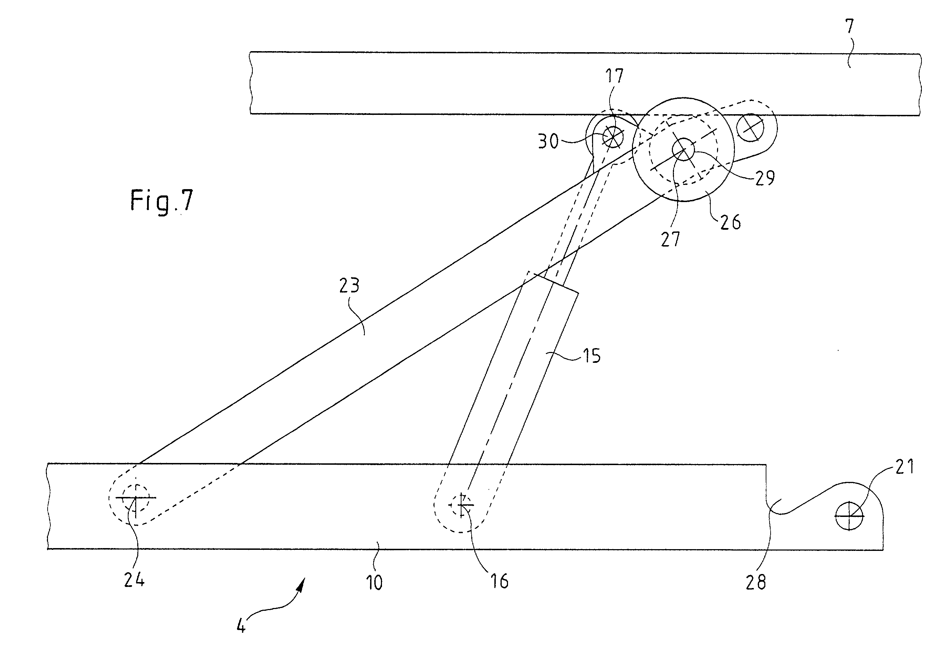

Comme on le voit mieux sur la figure 7, la biellette 23 comporte deux galets 26 pour soutenir respectivement l'un et l'autre des rails 7 de la benne 5, les galets 26 étant montés rotatifs autour d'un axe transversal d'articulation 27 qui, en position de transport, est situé juste en avant de l'axe 21.

La biellette 23 est disposée entre deux longerons du bâti 10, chaque galet 26 étant disposé à l'extérieur du longeron qui est situé du même côté que lui, les longerons présentant chacun une échancrure 28 permettant de loger une barre 29 s'étendant de la biellette 23 au galet 26 et servant à ce dernier de tourillon d'articulation.

De même que le bâti 10, la biellette 23 est formée par deux longerons entre lesquels s'étendent des traverses, et notamment une traverse 30 à laquelle est articulée l'extrémité de la tige du vérin 15 autour de l'axe 17. On observera que ce dernier axe est situé, en position de transport, juste en avant et au-dessus de l'axe 27.

L'extrémité du corps du vérin 15 est articulée autour de l'axe 16 elle aussi sur une traverse, disposée entre les longerons du bâti 10.

Les moyens d'articulation 32 entre la biellette 23 et le bâti 10 autour de l'axe 21, au lieu d'être permanents comme les autres moyens d'articulation, sont adaptés à être libérés, tandis que les moyens d'articulation 33 entre la potence 22 et la biellette 23 autour de l'axe 24 sont adaptés à être immobilisés par rapport au bâti 10.

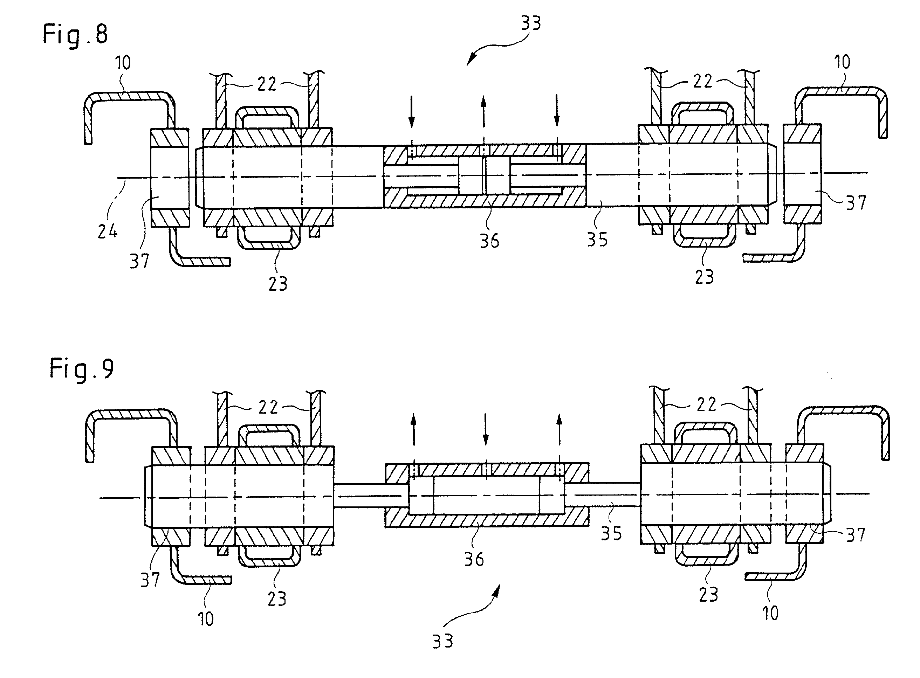

Comme on le voit sur la figure 8, les moyens d'articulation 33 comportent une barre transversale 35 servant de tourillon d'articulation pour les deux longerons de la biellette 23 et pour les deux chapes que comporte la potence 22, chacun des longerons 23 étant disposé au centre de l'une de ces chapes.

La barre 35 comporte en son centre un vérin double 36 ayant un corps commun et deux tiges reliées respectivement à la portion de la barre 35 située à gauche du vérin 36 et située à droite du vérin 36. Dans la position illustrée sur la figure 8, qui correspond à la position de transport de l'appareil (figure 1), les deux tiges du vérin 36 sont rentrées de sorte que la barre 35 a une longueur minimale. Toujours dans la position de transport, la potence 22 et la biellette 33 reposent sur des butées non illustrées du bâti 10 et sont positionnées vis-à-vis de celui-ci de sorte que chacune des extrémités de la barre 35 est en regard d'un oeil 37 ménagé coaxialement à la barre 35 respectivement dans l'un et l'autre des longerons du bâti 10.

Lorsque les tiges du vérin 36 sont en position sortie, c'est-à-dire lorsque la longueur de la barre 35 est maximale, chacun des bouts de cette barre est engagée dans un oeil 37 respectif, comme montré sur la figure 9.

On voit que dans la position illustrée sur la figure 8, les moyens d'articulation 33 entre la potence 22 et la biellette 23 sont libres de se déplacer par rapport au bâti 10 tandis que dans la position montrée sur la figure 9, les moyens d'articulation 33 sont verrouillés par rapport au bâti 10.

Bien entendu, dans chacune des positions illustrées sur les figures 8 et 9, la potence 22 et la biellette 23 peuvent pivoter l'une par rapport à l'autre autour de l'axe 24.

Les moyens d'articulation 32 entre le bâti 10 et la biellette 23 sont réalisés d'une façon similaire, les longerons de la biellette 23 étant chacun articulé sur une barre similaire à la barre 35, les moyens d'articulation 32 étant actifs lorsque cette barre est en position déployée (tiges sorties du corps du vérin central) et étant libérés lorsque cette barre est en position rétractée (tiges rentrées dans le corps du vérin central).

Chaque vérin central respectivement de la barre 35 et de la barre correspondante des moyens d'articulation 32 est commandé hydrauliquement et chacune de ces barres coopère avec un capteur de position relié à des moyens de sécurité propres à interdire toute manoeuvre impliquant un pivotement autour de l'axe 21 ou autour de l'axe 24 dans le cas où l'un ou l'autre des moyens d'articulation 32 ou 33 ne serait pas dans la position verrouillée ou libérée voulue pour que cette manoeuvre puisse s'effectuer.

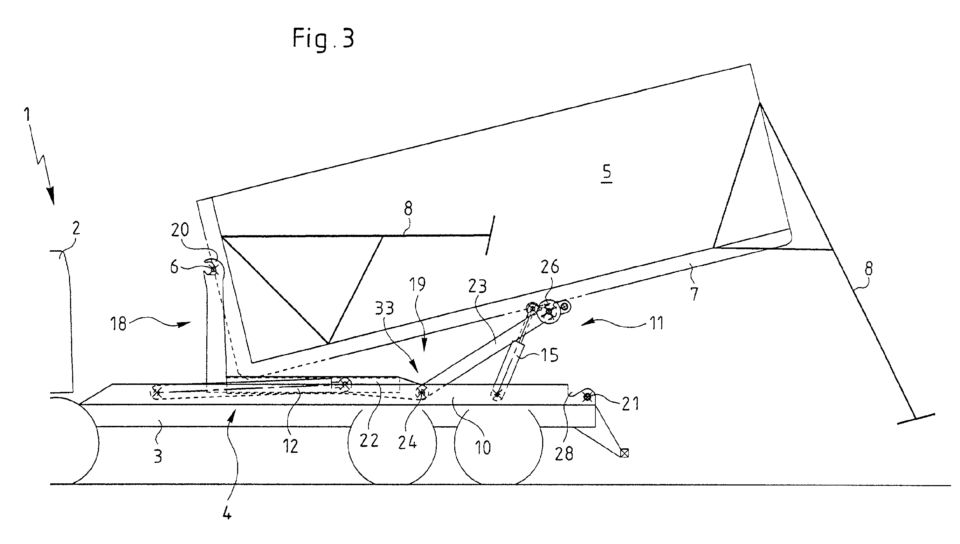

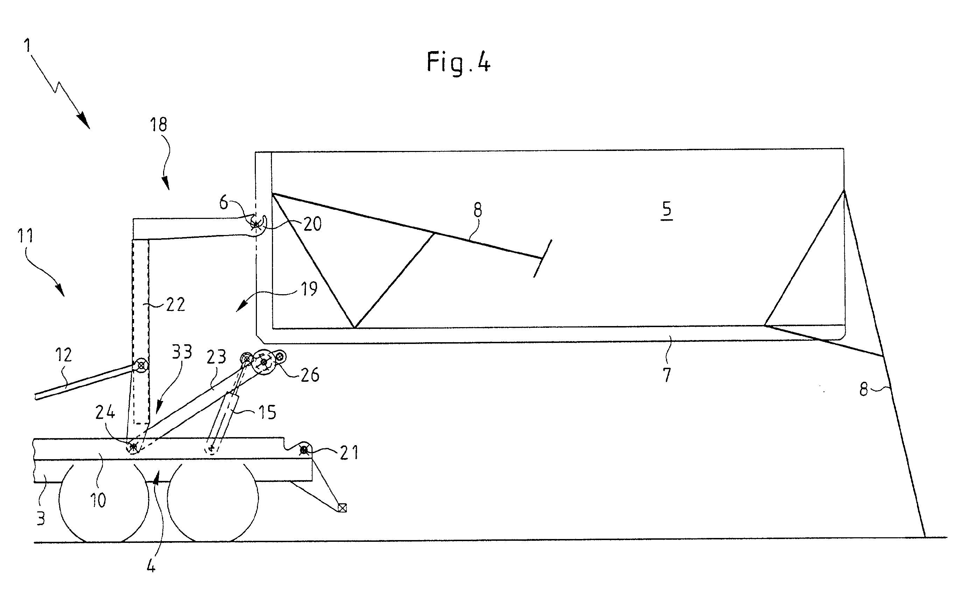

Lorsque les moyens d'articulation 33 sont immobilisés par rapport au bâti 10, la potence 22 peut pivoter autour de l'axe 24 par rapport au bâti 10, sous l'effet du vérin 12, vers le haut et vers l'arrière, ainsi que montré sur les figures 4 et 5 ainsi que 11. En outre, lorsque les moyens d'articulation 32 sont alors libérés du bâti 10, l'actionnement du vérin 15 permet de faire pivoter la biellette 23 vers le haut et vers l'avant autour de l'axe 24 afin d'atteindre la position de relevage de l'arrière d'une charge montrée sur les figures 3 à 5 et 7.

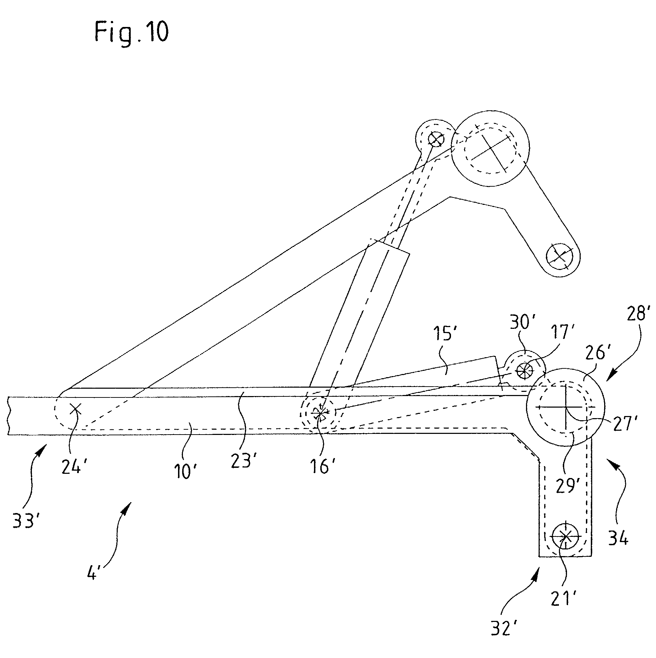

Les figures 10 à 12 montrent une variante 4' de l'appareil 4, pour laquelle, d'une façon générale, on a gardé les mêmes références numériques mais affectées d'un indice '.

Le profil de la biellette 23' n'est pas rectiligne mais en cornière, avec une première branche qui appartient au tronçon longitudinal 19' du bras de manutention 11' et la seconde branche qui est articulée à sa base autour de l'axe transversal de pivotement arrière 21', cette seconde branche formant, pour le bras de manutention 11', un tronçon postérieur 34 qui, en position de transport, est disposé derrière le tronçon longitudinal 19' et orienté verticalement ou à peu près. Le bâti 10' présente en conséquence un profil en L dont la première branche vient, comme le bâti 10, sur le châssis 3 du véhicule 1 et dont la seconde branche saille de la première branche vers le bas et se trouve juste derrière les longerons du châssis 3.

On notera que, pour simplifier les dessins, le vérin 15' n'a pas été représenté sur les figures 9 et 10 et, également, que la charge 5' illustrée sur cette figure est une benne conventionnelle qui n'est pas munie de pieds 8.

On va maintenant expliquer le fonctionnement des appareils 4 et 4'.

Lorsque l'on souhaite poser au sol la benne 5 ou 5' à partir de la position de transport illustrée sur la figure 1, l'on actionne le vérin 25 ou 25' pour faire passer la seconde branche de la potence 18 ou 18' de sa positon déployée à sa position rétractée, ce qui a pour effet de faire reculer la charge 5 ou 5' par rapport au véhicule 1.

Lorsque la seconde branche de la potence 18 ou 18' est rétractée, on se trouve dans la position de début de basculement de la charge 5 ou 5' illustrée sur la figure 2. Dans cette position, les moyens d'articulation 33 ou 33' sont verrouillés au bâti 10 ou 10', de sorte que l'axe d'articulation 24 ou 24' reste fixe par rapport à ce bâti. La potence 18 ou 18' est donc libre de pivoter autour de l'axe 24 ou 24'.

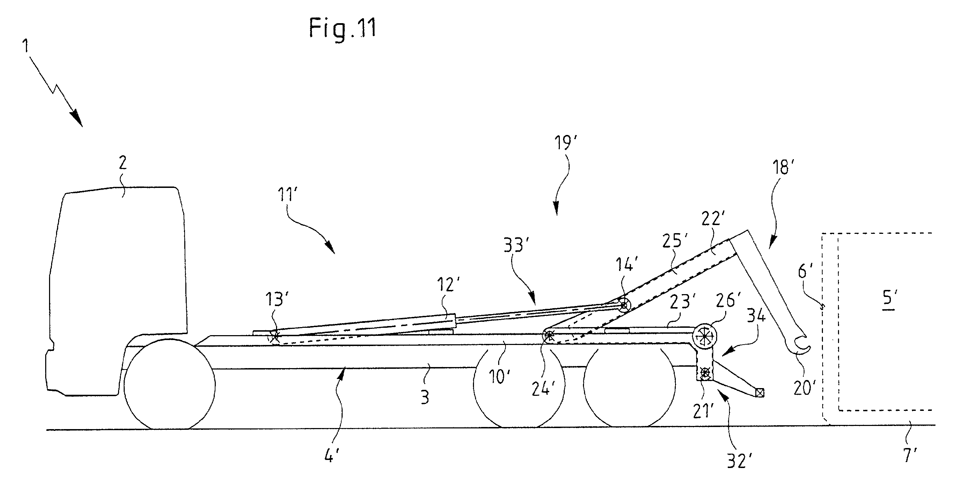

La manoeuvre de pose au sol de la charge 5 ou 5' se poursuit par l'actionnement du vérin de basculement 12 ou 12' pour faire pivoter la potence 22 ou 22' autour de l'axe 24 ou 24', jusqu'à la position de pose au sol illustrée sur la figure 11. Au cours du passage entre la position de début de basculement (figure 2) et la position de pose au sol (figure 11), la charge 5 ou 5' s'est inclinée vers le haut et vers l'arrière en pivotant autour de l'axe d'articulation 27 ou 27' des galets 26 ou 26' jusqu'à ce que la charge 5 ou 5' rencontre le sol au niveau de l'arête entre sa face inférieure et sa face arrière, la benne s'abaissant alors progressivement jusqu'à ce que sa face inférieure repose tout entière sur le sol, ce qui permet alors au crochet 20 ou 20' de se dégager de l'anse 6 ou 6'.

Pour prendre au sol une benne, on effectue exactement les mêmes manoeuvres, mais dans l'ordre inverse: on actionne le vérin 12 ou 12' pour engager le crochet 20 ou 20' dans l'anse 6 ou 6' puis pour soulever la charge 5 ou 5' vers l'avant et vers le haut tout en la faisant avancer par rapport au véhicule 1 (de préférence avec le véhicule qui recule vers la charge, cette dernière restant fixe par rapport au sol) jusqu'à ce que les rails 7 ou 7' viennent rencontrer les galets 23 ou 23', ce à partir de quoi la benne 5 ou 5' se redresse tout en continuant à avancer par rapport au véhicule 1 jusqu'à la position de fin de basculement (figure 2), le vérin 25 ou 25' étant alors actionné pour parvenir à la position de transport (figure 1).

Dans cette position, les moyens d'articulation 33 ou 33' sont libérés vis-à-vis du bâti 10 ou 10' tandis qu'un verrouillage, effectué par des moyens bien connus, est actif entre la potence 22 ou 22' et la biellette 23 ou 23', de sorte que ces deux organes ne peuvent pas pivoter l'un par rapport à l'autre autour de l'axe 24 ou 24', mais forment un ensemble rigide.

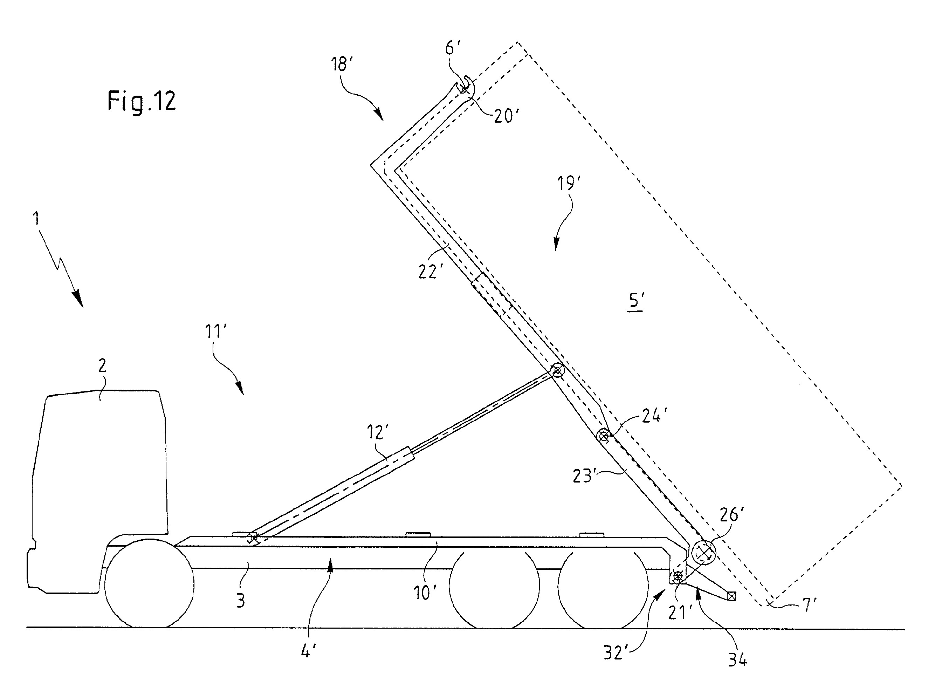

Pour passer de la position de transport (figure 1) à la position de vidage (figure 12), l'on actionne le vérin 12 ou 12', afin de faire pivoter le bras 11 ou 11', et en particulier le crochet 20 ou 20', et par conséquent la charge 5 ou 5', autour de l'axe 21 ou 21'. La charge 5 ou 5', du fait de l'inclinaison qui lui est donnée, peut alors se vider, après ouverture de sa ou de ses portes arrière, derrière le véhicule 1.

En dehors des moments où il doit être actionné, le vérin 15 ou 15' est passif, c'est-à-dire que sa tige est libre de se déplacer par rapport à son corps, grâce à un distributeur double effet dont la position de repos met en communication les deux chambres de ce vérin. Ce caractère passif permet notamment le passage de l'appareil 4 ou 4' de la position de transport (figure 1) à la position de vidage (figure 12).

Lorsque l'on souhaite mettre sur pied une charge telle que la benne 5 à partir de la position de transport illustrée sur la figure 1, on actionne le vérin 25 ou 25' pour faire passer la seconde branche de la potence 22 ou 22' de sa position déployée à sa position rétractée, ce qui a pour effet de faire reculer la benne 5 par rapport au véhicule 1.

Lorsque la seconde branche de la potence 22 ou 22' est en position rétractée, on se trouve dans la position de début ou de fin de basculement illustrée sur la figure 2, où les moyens d'articulation 33 ou 33' sont immobilisés par rapport au bâti 10 ou 10', mais au lieu d'actionner alors le vérin 12 ou 12', on libère les moyens d'articulation 32 ou 32' et l'on actionne le vérin 15 ou 15', de sorte que la biellette 23 ou 23' pivote autour de l'axe 24 ou 24' vers le haut et vers l'avant, ce qui relève l'arrière de la benne 5, qui est alors soutenue à l'avant par le crochet 20 ou le crochet 20' et au milieu par les galets 26 ou 26'. L'arrière de la benne 5 est alors suffisamment relevé pour que l'on puisse procéder au déploiement des pieds arrière 8. L'on est alors dans la configuration illustrée sur la figure 3.

L'on actionne alors le vérin 12 ou le vérin 12', ce qui a pour effet de faire pivoter la potence 22 ou 22' autour de l'axe 24 ou 24' vers le haut et vers l'arrière, de sorte que l'avant de la benne 5 se relève tandis que la benne recule par rapport au véhicule, les pieds arrière 8 rencontrant le sol au cours de ce mouvement, que l'on poursuit jusqu'à la position illustrée sur la figure 4, où la benne 5 est disposée horizontalement ou à peu près avec son fond qui n'est plus en contact avec les galets 26 ou 26'.

L'on déploie alors les pieds avant 8, puis l'on actionne à nouveau le vérin 12 ou 12' pour que les pieds 8 prennent contact au sol (position illustrée sur la figure 5) puis pour que le crochet 20 ou 20' se dégage de l'anse 6.

Pour charger sur le véhicule 1 la benne 5 posée sur ses pieds 8, l'on effectue les mêmes manoeuvres, mais en sens inverse.

Dans des variantes non illustrées, la potence télescopique 22 ou 22' est remplacée par un autre type de potence, télescopique ou non, notamment du type décrit dans la demande de brevet FR 2 185 520 A ou dans la demande de brevet FR 2 169 810 A.

Dans d'autres variantes non illustrées, il existe deux vérins de basculement disposés côte à côte (plutôt qu'un seul) et le véhicule, plutôt que d'être un camion à châssis porteur, est une semi-remorque.

De nombreuses autres variantes sont possibles en fonction des circonstances, et on rappelle à cet égard que l'invention ne se limite pas aux exemples décrits et représentés.

## Revendications

1. Appareil pour permettre à un véhicule (1) de poser ou de prendre au sol une charge (5 ; 5') telle qu'une benne ainsi que de vider cette charge, ladite charge étant munie, sur une face avant, d'une anse de levage (6 ; 6'), ledit appareil comportant un bras de manutention (11 ; 11') déformable et basculant muni à une extrémité d'un crochet (20 ; 20') prévu pour s'engager avec l'anse de levage (6 ; 6') de ladite charge (5 ; 5'), ledit bras de manutention (11 ; 11') admettant:
- une position de transport où un tronçon frontal (18; 18') est disposé à l'avant dudit appareil et orienté verticalement ou à peu près avec ledit crochet (20 ; 20') qui se trouve à son sommet et où un tronçon longitudinal (19 ; 19') est disposé derrière le tronçon frontal (18 ; 18') et orienté horizontalement ou à peu près avec l'extrémité avant du tronçon longitudinal (19 ; 19') qui est raccordée à la base du tronçon frontal (18 ; 18') ;
- une position de pose ou de prise au sol où ledit crochet (20 ; 20') est derrière le véhicule à une hauteur lui permettant de s'engager avec ou de se libérer de ladite anse de levage (6 ; 6') d'une dite charge (5 ; 5') posée sur le sol ; et
- une position de vidage à laquelle parvient ledit crochet (20 ; 20') à partir de ladite position de transport en pivotant, sous l'effet d'un vérin de basculement (12 ; 12'), vers le haut et vers l'arrière autour d'un axe transversal de pivotement situé à l'arrière dudit appareil ;
ledit bras de manutention (11 ; 11') comportant une potence (22 ; 22') dont une première branche forme ledit tronçon frontal (18 ; 18') et dont la seconde branche appartient audit tronçon longitudinal (19 ; 19'), et comportant une biellette (23 ; 23') fournissant le reste dudit tronçon longitudinal (19 ; 19'), ladite biellette (23 ; 23') étant articulée à l'avant avec la seconde branche de ladite potence (18 ; 18') autour d'un axe transversal de pivotement intermédiaire (24 ; 24') et articulée à l'arrière autour dudit axe transversal de pivotement arrière ;
**caractérisé en ce que** :
- les moyens d'articulation (32 ; 32') de ladite biellette (23 ; 23') autour dudit axe transversal de pivotement arrière (21 ; 21') sont adaptés à être libérés tandis que les moyens d'articulation (33 ; 33') autour dudit axe transversal de pivotement intermédiaire (24 ; 24') sont adaptés à être verrouillés par rapport audit véhicule à l'emplacement qu'ils occupent en position de transport ; et
- ledit appareil comporte des moyens (15 ; 15') pour faire pivoter ladite biellette (23 ; 23') vers le haut et vers l'avant autour dudit axe transversal de pivotement intermédiaire (24 ; 24'), après libération desdits moyens d'articulation de la biellette (32 ; 32') autour de l'axe transversal de pivotement arrière (21; 21') et verrouillage par rapport audit véhicule desdits moyens d'articulation (33 ; 33') autour dudit axe transversal de pivotement intermédiaire (24 ; 24').

2. Appareil selon la revendication 1, **caractérisé en ce qu'**il comporte un bâti (10 ; 10') prévu pour être fixé sur le châssis (3) dudit véhicule (1), ladite biellette (23 ; 23') étant articulée avec ledit bâti (10 ; 10') autour dudit axe transversal de pivotement arrière (21 ; 21').

3. Appareil selon la revendication 2, **caractérisé en ce que** lesdits moyens pour faire pivoter ladite biellette (23 ; 23') comportent un vérin de relevage (15 ; 15') articulé à une extrémité à ladite biellette et articulé à l'autre extrémité audit bâti (10 ; 10').

4. Appareil selon la revendication 3, **caractérisé en ce que** ledit vérin de relevage (15 ; 15') est articulé audit bâti (10 ; 10') à l'avant et à ladite biellette (23 ; 23') à l'arrière.

5. Appareil selon l'une quelconque des revendications 1 à 4, **caractérisé en ce que** ladite biellette (23 ; 23') comporte deux galets (26 ; 26') prévus pour soutenir respectivement un rail longitudinal (7 ; 7') situé à droite et un rail longitudinal (7 ; 7') situé à gauche sur une face inférieure de ladite charge (5 ; 5').

6. Appareil selon la revendication 5, **caractérisé en ce que** l'axe transversal de pivotement arrière (21 ; 21') et l'axe transversal (27 ; 27') autour duquel sont articulés lesdits galets (26 ; 26'), sont situés à l'écart l'un de l'autre.

7. Appareil selon la revendication 6, **caractérisé en ce que** ladite biellette (23) appartient en entier audit tronçon longitudinal (19) avec l'axe transversal d'articulation des galets (27) qui, en position de transport, est situé juste en avant de l'axe transversal de pivotement arrière (21).

8. Appareil selon la revendication 6, **caractérisé en ce que** ladite biellette (23') est à profil en cornière dont une première branche appartient audit tronçon longitudinal (19') et dont la seconde branche est articulée à sa base autour dudit axe transversal de pivotement arrière (21'), ledit axe (27') d'articulation des galets (26') étant situé à la jonction entre la première et la seconde branche de ladite biellette (23').

9. Appareil selon l'une quelconque des revendications 5 à 8, **caractérisé en ce que** ladite biellette (23 ; 23') est disposée entre deux longerons d'un bâti (10 ; 10') que comporte ledit appareil, **en ce que** chaque dit galet (26 ; 26') est disposé plus à l'extérieur que le longeron correspondant ; et **en ce que** chaque longeron dudit bâti (10 ; 10') présente une échancrure (28 ; 28') pour loger une barre s'étendant de la biellette (23 ; 23') au galet (26 ; 26') correspondant.

10. Appareil selon l'une quelconque des revendications 5 à 9, **caractérisé en ce que** ledit vérin de relevage (15; 15') est articulé à ladite biellette (23 ; 23') en un emplacement situé, en position de transport, juste en avant et au-dessus de l'axe (27 ; 27') d'articulation des galets.

11. Véhicule **caractérisé en ce qu'**il comporte un appareil selon l'une quelconque des revendications 1 à 10.

12. Procédé pour soulever avec un véhicule selon la revendication 11 une charge (5) munie sur une face avant d'une anse de levage (6) et munie de quatre pieds (8) repliables afin de disposer ladite charge (5) sur lesdits pieds (8) à l'état déployé, la face inférieure de ladite charge étant alors plus haute que dans ladite position de transport, comportant :
a) l'opération de passer de ladite position de transport à une position de début ou de fin de basculement ;
b) l'opération de faire pivoter ladite biellette (23 ; 23') vers le haut et vers l'arrière autour dudit axe transversal de pivotement intermédiaire (24 ; 24') ;
c) l'opération de déployer les pieds arrière (8) de ladite charge (5) ;
d) l'opération de faire pivoter ladite potence (22 ; 22') vers le haut et vers l'arrière autour dudit axe transversal de pivotement intermédiaire (24 ; 24') ; et
e) l'opération de déployer les pieds avant (8) de ladite charge (5).
